Europäisches Patentamt

**European Patent Office**

**Office européen des brevets**

(19)

(11) Numéro de publication : **0 041 017**
**B1**

(12)                    **FASCICULE DE BREVET EUROPÉEN**

(45) Date de publication du fascicule du brevet :
**03.08.83**

(51) Int. Cl.³ : **F 41 F   9/06**

(21) Numéro de dépôt : **81400802.5**

(22) Date de dépôt : **21.05.81**

(54) **Dispositif de transfert d'objets cylindriques tels que des munitions.**

(30) Priorité : **23.05.80 FR 8011622**
**04.07.80 FR 8014977**

(43) Date de publication de la demande :
**02.12.81 Bulletin 81/48**

(45) Mention de la délivrance du brevet :
**03.08.83 Bulletin 83/31**

(84) Etats contractants désignés :
**AT CH DE FR GB IT LI NL SE**

(56) Documents cités :
**FR A 593 539**
**FR A 2 049 114**
**FR A 2 217 243**
**FR A 2 321 106**
**FR A 2 404 827**
**US A 3 177 772**

(73) Titulaire : **CREUSOT-LOIRE**
**42 rue d'Anjou**
**F-75008 Paris (FR)**

(72) Inventeur : **Voillot, Hervé**
**73bis rue Diderot**
**F-78500 Sartrouville (FR)** ·

(74) Mandataire : **Le Brusque, Maurice et al**
**CREUSOT-LOIRE 15 rue Pasquier**
**F-75383 Paris Cedex 08 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Dispositif de transfert d'objets cylindriques tels que des munitions

L'invention a pour objet un dispositif de transport d'objets cylindriques et s'applique plus spécialement à l'alimentation d'un canon en munitions de plusieurs types.

Un canon, en particulier un canon anti-aérien, se compose d'une tourelle orientable en azimut autour d'un axe et d'une masse oscillante portant le tube, orientable en site autour d'un axe perpendiculaire à l'axe de la tourelle. Les munitions sont placées dans une soute et sont introduites dans l'axe de la tourelle par un élévateur puis amenées jusqu'au canon par un dispositif d'acheminement.

Généralement ce dispositif d'acheminement agit par déplacements successifs et comprend une série d'organes d'entraînement rotatifs constitués chacun d'au moins deux plateaux à alvéoles calés sur un arbre, lesdits arbres étant entraînés en rotation en synchronisme et disposés parallèlement et à égale distance les uns des autres le long d'une surface parallèle à deux organes de guidage écartés formant un couloir de largeur sensiblement égale à celle des objets.

Chaque munition est ainsi prise en charge dans les alvéoles d'une paire de plateaux puis poussée à l'intérieur du couloir de façon à être prise en charge par les plateaux suivants et ainsi de suite, les plateaux étant légèrement décalés d'une paire à la suivante de façon à s'imbriquer.

Il est courant d'utiliser des plateaux à quatre alvéoles qui ont alors la forme de croix de Malte. Il semble inutile de décrire plus en détails le système d'acheminement par les plateaux qui est bien connu et qui permet de pousser progressivement la munition par déplacements successifs à l'intérieur du couloir.

Généralement, dans les systèmes d'alimentation des canons, le couloir d'acheminement est constitué de deux parties successives appelées couloir fixe et couloir mobile.

Le couloir fixe est solidaire de la tourelle et fait passer chaque munition progressivement de la position d'introduction dans l'axe de la tourelle à une position de sortie parallèle à l'axe d'orientation en site de la masse oscillante.

Le couloir mobile est solidaire de la masse oscillante et fait passer la munition de la position de sortie du couloir fixe parallèle à l'axe d'orientation en site à une position parallèle à l'axe du canon à partir de laquelle la munition est introduite dans la culasse.

Pour sa part, le brevet FR-A-2 321 106 dévoile une arme à feu automatique dans laquelle des chargeurs alimentent sélectivement un canal d'alimentation commun en utilisant chacun un aiguillage.

De tels canons sont utilisés notamment sur les navires de guerre pour la défense contre avions. Dans ce cas, il est surtout nécessaire de disposer d'une cadence de tir importante et de pouvoir commander le tir avec un temps de réaction aussi réduit que possible. C'est pourquoi de tels canons sont équipés de soutes automatiques qui permettent de commander le tir depuis la passerelle. Cependant, l'officier de tir peut souhaiter utiliser certaines munitions de type spécial, par exemple, des obus éclairants.

L'invention a pour objet un dispositif qui permet de garder en réserve et de tirer à volonté des munitions spéciales sans gêner le tir des munitions ordinaires.

Cependant, l'invention ne se limite pas à l'alimentation des canons en munitions spéciales et, d'une façon plus générale, pourra être appliquée chaque fois que l'on désirera avoir la possibilité d'incorporer des objets gardés en réserve dans une suite d'objets se déplaçant à l'intérieur d'un couloir d'acheminement.

Conformément à l'invention, le couloir d'acheminement est constitué de trois parties successives formant respectivement un couloir amont, un couloir intermédiaire et un couloir aval et le couloir intermédiaire est constitué par une partie d'un magasin en forme de couloir d'acheminement refermé sur lui-même et constitué d'une chaîne fermée de paires de plateaux à alvéoles entourés par un organe de guidage qui est interrompu à l'entrée et à la sortie du couloir intermédiaire respectivement pour le passage des objets venant du couloir amont et allant vers le couloir aval.

De plus, le magasin est associé à deux aiguillages placés respectivement aux extrémités amont et aval du couloir intermédiaire et à des moyens de commande de l'orientation des deux aiguillages amont et aval alternativement dans une première position assurant la continuité du couloir intermédiaire respectivement avec le couloir amont et avec le couloir aval et dans une deuxième position assurant la continuité du couloir intermédiaire, respectivement en amont et vers l'aval, avec le reste du magasin.

Dans un mode de réalisation préférentiel, le magasin comporte (n) paires de plateaux ménageant (n) emplacements successifs et est partiellement rempli d'objets maintenus en réserve et régulièrement répartis en (a) groupes de (b) objets entre lesquels sont ménagés (a) emplacements libres et les objets venant du couloir amont viennent s'intercaler pendant leur trajet dans le couloir intermédiaire, dans les espaces libres laissés entre les groupes d'objets en réserve.

De préférence, les objets acheminés dans le couloir amont sont séparés chacun du suivant par (b) emplacements libres et les plateaux d'entraînement du magasin et du couloir amont sont commandés en synchronisme de telle sorte que l'arrivée dans le couloir intermédiaire d'un objet venant du couloir amont coïncide avec le passage d'un emplacement libre du magasin, l'aiguillage amont étant successivement dans la première position de continuité du couloir amont avec le couloir intermédiaire pour le passage de chaque objet venant du couloir amont et dans la seconde position de continuité du magasin pour le passage des (b) objets en réserve et ainsi de suite, alternativement, l'aiguillage aval étant commandé de la même façon avec un décalage correspondant au nombre d'emplacements du couloir intermédiaire.

En outre, les deux aiguillages amont et aval sont associés, respectivement, à un plateau d'entrée et à un plateau de sortie placés à l'extérieur du couloir formé constituant le magasin, et les deux plateaux d'entrée et de sortie constituant respectivement le dernier plateau du couloir amont et le premier plateau du couloir aval.

Dans le cas de l'alimentation en munitions d'une tourelle d'artillerie, il est intéressant que le magasin où se trouvent les munitions spéciales gardées en réserve soit placé aussi près que possible de la fin du couloir d'acheminement dont le couloir intermédiaire constitue une partie.

Compte tenu de son poids et de son encombrement, on est obligé de placer le magasin dans l'affût de la tourelle. Un avantage supplémentaire des dispositions selon l'invention réside dans le fait qu'il est possible de placer la fin du couloir intermédiaire à la hauteur de l'axe des tourillons de telle sorte qu'une munition spéciale en réserve dans le couloir supplémentaire passe directement dans le couloir mobile qui, dans ce cas, constitue le couloir aval.

A cet effet, on fait coïncider l'axe du plateau de sortie du couloir intermédiaire avec l'axe des tourillons, le plateau de sortie et le plateau suivant du couloir aval étant placé de part et d'autre de celui-ci et le couloir intermédiaire est relié au couloir aval par un couloir de liaison incurvé formant successivement une courbe circulaire de longueur variable dépendant de l'orientation du canon, centrée sur l'axe des tourillons et se raccordant tangentiellement vers l'amont sur le couloir intermédiaire et vers l'aval sur une contre-courbe circulaire centrée sur l'axe du plateau suivant du couloir aval et se raccordant tangentiellement sur celui-ci.

Grâce à cette disposition et à des caractéristiques supplémentaires qui seront décrites en détails plus loin, le temps d'accès des munitions spéciales est réduit au minimum.

En outre, l'ensemble de ces dispositions particulières donne l'avantage important de supprimer le point anguleux qui, dans les dispositions connues précédemment, existait à l'articulation entre le couloir fixe et le couloir mobile. Il est ainsi possible de faire passer les munitions de façon continue depuis le couloir fixe jusqu'au couloir mobile quelle que soit l'orientation du canon et même pendant le mouvement d'orientation.

L'invention va maintenant être décrite en se référant à plusieurs modes de réalisation représentés schématiquement sur les dessins annexés.

La figure 1 est une vue schématique d'un mode de réalisation simplifié du couloir d'acheminement associé à un magasin de réserve selon l'invention.

La figure 2 est une vue du magasin en coupe transversale par un plan passant par un arbre d'entraînement de plateaux.

Les figures 3 à 6 représentent schématiquement les étapes successives du passage des munitions dans le couloir intermédiaire.

La figure 7 est une vue de détail de l'extrémité amont du couloir intermédiaire et de l'aiguillage amont.

La figure 8 est une vue en coupe axiale selon AA, figure 7 de la commande mécanique du couloir et de l'aiguillage amont.

La figure 9 est une vue de détail de l'extrémité aval du couloir intermédiaire et de l'aiguillage aval.

La figure 10 est une vue en coupe axiale selon BB, figure 9 de la commande mécanique du couloir et de l'aiguillage aval.

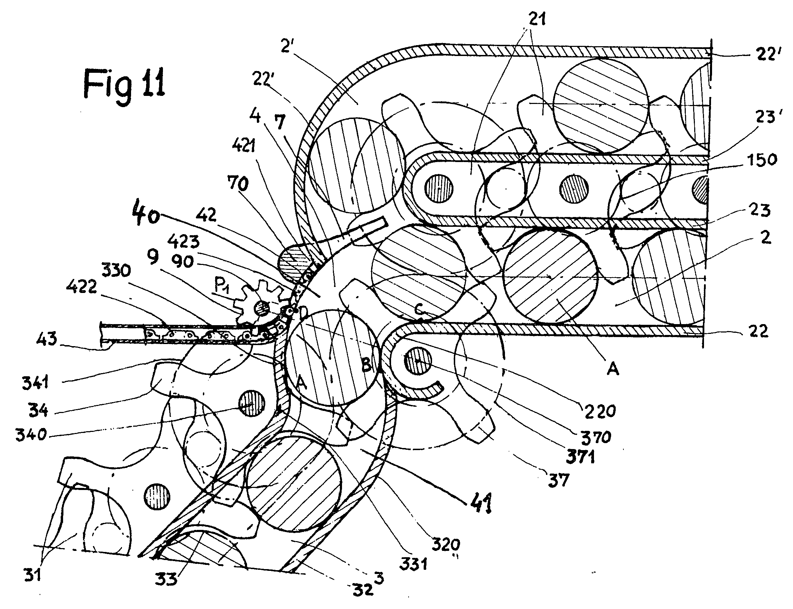

La figure 11 est une vue de détail, en coupe longitudinale, de la partie articulée d'un couloir d'acheminement, dans le cas de l'alimentation de la masse oscillante d'un canon pivotant autour d'un axe des tourillons.

La figure 12 est une vue en coupe selon C-C de la figure 11 par un plan passant par l'axe des tourillons.

La figure 13 est une vue de côté selon la ligne D-D de la figure 12.

La figure 14 est une vue de dessus d'un maillon de la chaîne arrière.

La figure 15 est une vue en coupe selon la ligne E-E de la figure 14.

La figure 16 est une vue de dessus d'un maillon de la chaîne avant.

La figure 17 est une vue de côté selon la ligne F-F de la figure 16.

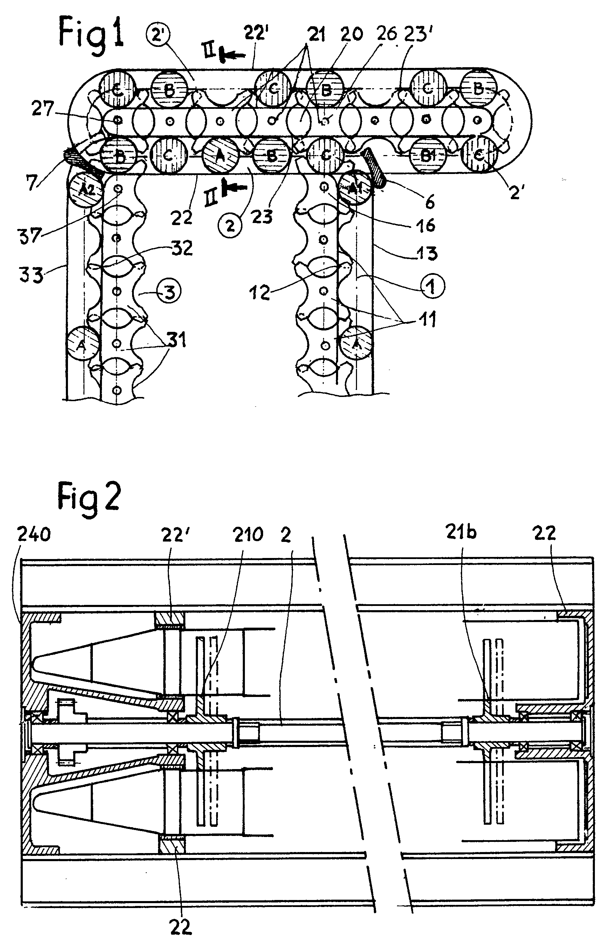

Sur la figure 1, on a représenté schématiquement un mode de réalisation simplifié d'un couloir d'acheminement qui, selon une caractéristique de l'invention, se compose de trois parties successives : un couloir amont 1, un couloir intermédiaire 2 et un couloir aval 3.

Chacun de ces couloirs est constitué de façon classique de deux guides parallèles écartés d'une distance égale à l'épaisseur des objets transportés et associés à une série de plateaux à alvéoles dont les axes sont alignés sur une ligne parallèle aux guides de telle sorte que les fonds des alvéoles soient tangents, au jeu près, à l'un des guides dit guide intérieur, l'autre étant le guide extérieur.

Ainsi, le couloir amont 1 est constitué par la série de plateaux 11, associés aux guides rectilignes 12 et 13, le couloir intermédiaire 2 par les plateaux 21 associés aux guides 22 et 23 et le couloir aval 3 par les plateaux 31 associés aux guides 32 et 33.

En outre, le couloir intermédiaire 2 constitue une partie d'un magasin 20 dont l'autre partie forme un couloir supplémentaire 2' qui se referme à ses deux extrémités sur le couloir 2, l'ensemble formant un couloir fermé.

Ce couloir supplémentaire 2' est limité également par deux guides 22' et 23' qui sont placés dans le prolongement des guides 22 et 23 du couloir intermédiaire 2 de façon à former deux surfaces cylindriques fermées et parallèles.

Ainsi, le couloir amont 1 et le couloir supplémentaire 2′ forment une bifurcation qui converge à l'extrémité amont du couloir intermédiaire 2 dont l'extrémité aval débouche par une seconde bifurcation dans le couloir aval 3 et le couloir supplémentaire 2′.

Par conséquent, les guides intérieurs 23 et 23′ des couloirs 2 et 2′ peuvent former une surface de guidage continue au centre du magasin 20. De même, le guide extérieur 22 du couloir 2 est placé dans le prolongement des guides 12 et 32 des couloirs 1 et 3.

En revanche, les extrémités des guides extérieurs 22 et 22′ doivent être séparées par deux vides permettant le passage des munitions venant du couloir amont 1 ou allant vers le couloir aval 3.

Ces deux vides sont comblés respectivement par un aiguillage amont 6 et un aiguillage aval 7 pouvant être orientés chacun individuellement, suivant deux positions assurant la continuité du couloir intermédiaire dans une première position avec le couloir amont et le couloir aval et dans une seconde position avec le couloir supplémentaire 2′ pour refermer le magasin.

Dans ce but, les deux aiguillages seront constitués chacun par un bras pivotant autour d'un axe placé entre les extrémités du guide extérieur 22′ du magasin 20 et des guides 13 et 33 des couloirs 1 et 3. Ainsi les deux bras 6 et 7 assurent sur une face, dans la première position, la liaison entre le guide intérieur 23 du couloir intermédiaire 2 et respectivement les guides 13 et 33 des couloirs amont 1 et aval 3 et sur l'autre face, dans la seconde position, la liaison du guide extérieur 22 du couloir intermédiaire 2 avec, respectivement, les deux extrémités du guide extérieur 22′ du couloir supplémentaire 2′.

Comme on l'a représenté sur la figure 2 qui est une coupe transversale du magasin 20 les plateaux sont disposés en deux séries parallèles écartées l'une de l'autre et sont calés par paires sur des arbres 24 entraînés en rotation en synchronisme, de telle sorte qu'à tout moment les munitions soient d'une part maintenues entre les deux organes de guidage constitués par exemple chacun de deux rails munis d'une surface de glissement et d'autre part prises en charge dans les alvéoles de deux plateaux prenant appui sur la douille l'un, dit plateau avant, du côté sertissage et l'autre, dit plateau arrière, du côté du plateau de douille. De façon bien connue, les plateaux de deux paires successives sont légèrement décalés, comme on l'a représenté sur la figure 2 de façon que les bras en croix de Malte s'imbriquent et provoquent l'avancement de la munition d'une paire de plateaux à la suivante en prenant appui sur les guides.

D'autre part, les deux aiguillages 6 et 7 sont associés à deux plateaux 16 et 37 respectivement d'entrée et de sortie, placés à l'extérieur du couloir fermé constituant le magasin 20 en vis à vis des plateaux 26 et 27 de la série 21 correspondant aux extrémités du couloir intermédiaire 2 ; le plateau d'entrée 16 est placé à la fin de la série de plateaux 11 du couloir amont 1 alors que le plateau de sortie 37 se trouve au début de la série de plateaux 31 du couloir aval 3.

De la sorte lorsque l'aiguillage 6 est dans la première position représenté en trait plein sur la figure 1 et qui assure la continuité du couloir amont 1 avec le couloir intermédiaire 2, une munition A1 arrivant à la fin du couloir amont 1 est prise en charge par le plateau d'entrée 16 puis par le plateau 26 tournant en synchronisme avec lui et en sens inverse et les deux plateaux 16 et 26 l'incorporent en même temps dans la série de plateaux 21 du couloir intermédiaire 2.

De la même façon, à la sortie du couloir 2, l'aiguillage avant 7 étant dans la première position représentée en trait plein sur la figure 1, qui assure la continuité du couloir intermédiaire 2 avec le couloir aval 3, la munition A2 arrivant à la fin du couloir 2, est prise en charge à la fois par les plateaux 27 et 37 puis échappe au plateau 27 en restant englobée dans le plateau de sortie 37 qui l'introduit dans le couloir aval 3 et l'incorpore à la série d'organes d'entraînement 31 qui l'entraînent vers l'aval.

En revanche, lorsque les aiguillages 6 et 7 sont dans la deuxième position, de continuité du magasin, les plateaux 16 et 37 se comportent de la même façon, respectivement, que les plateaux 26 et 27 en prenant en charge en même temps que ceux-ci les munitions venant du couloir supplémentaire 2′ ou allant vers celui-ci.

De préférence, comme représenté sur les figures, les plateaux ont une forme en croix de Malte comprenant quatre bras d'entraînement entre lesquels sont ménagées quatre alvéoles et permettant l'avancement de quatre munitions à chaque tour de l'arbre 23.

Cette forme en croix de Malte permet d'utiliser la même série de plateaux 21 pour l'avancement des munitions dans le couloir intermédiaire 2 et dans le couloir supplémentaire 2′ du magasin 20. Dans ce cas en effet, comme on l'a représenté sur la figure 1, le magasin 20 a la forme d'un barillet plat symétrique par rapport au plan passant par les axes de la série de plateaux 21. Le nombre de plateaux et par conséquent la longueur du magasin dépendent du nombre d'emplacements de munitions dont on désire disposer à l'intérieur du magasin. En effet, comme on le voit sur les figures 1 et 2, chaque paire de plateaux commande simultanément l'avancement de deux munitions dans les deux couloirs qui l'encadrent et, en tenant compte des deux emplacements supplémentaires placés aux deux extrémités du magasin, il apparaît que si l'on veut disposer de (n) emplacements, le magasin doit comporter un nombre de plateaux égal à $n/2 - 1$.

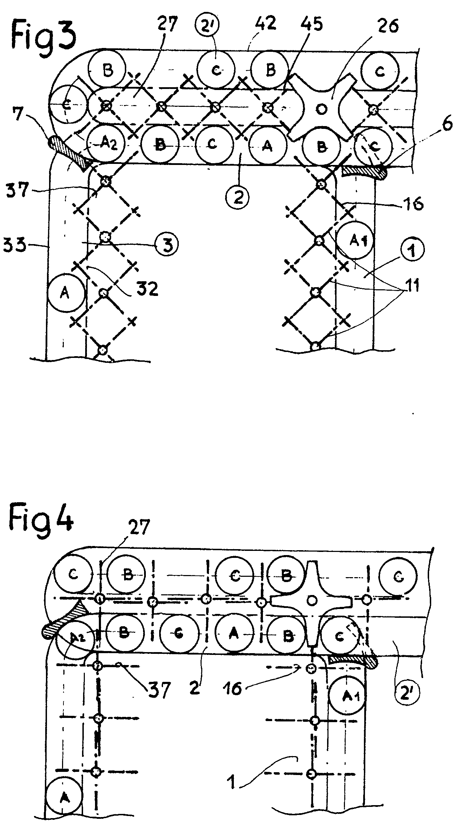

La forme des plateaux en croix de Malte facilite l'introduction dans le couloir intermédiaire 2 des munitions venant du couloir amont 1 et leur évacuation par le couloir aval, comme on l'a représenté sur les figures 3, 4, 5, 6 sur lesquelles les plateaux sont seulement schématisés.

Sur la figure 3, on a représenté l'arrivée d'une munition ordinaire de type A à la fin du couloir amont 1, avant sa prise en charge par le dernier plateau 16.

Dans cette position, le plateau d'entrée 16 contient une munition de type B tenue en réserve dans le magasin 20. En effet, celui-ci est chargé, selon l'invention, d'un certain nombre de munitions spéciales de type B et C et celles-ci sont réparties en plusieurs groupes de deux munitions séparés par un intervalle libre.

Une caractéristique essentielle de l'invention consiste à faire en sorte que le passage de l'intervalle libre devant le débouché du couloir amont 1 coïncide avec l'arrivée d'une munition A à l'extrémité de ce couloir. Dans la position représentée sur la figure 3, c'est une munition de type C qui arrive à l'entrée du couloir intermédiaire 2, l'aiguillage amont 6 étant dans la seconde position définie plus haut qui assure la continuité du couloir supplémentaire 2' avec le couloir intermédiaire 2.

La figure 4 représente l'entrée de la munition C dans le couloir intermédiaire et sa prise en charge par le plateau d'entrée 16, la forme en croix de Malte permettant à celui-ci de prendre en charge au même moment la munition de type A arrivant à l'extrémité du couloir amont 1.

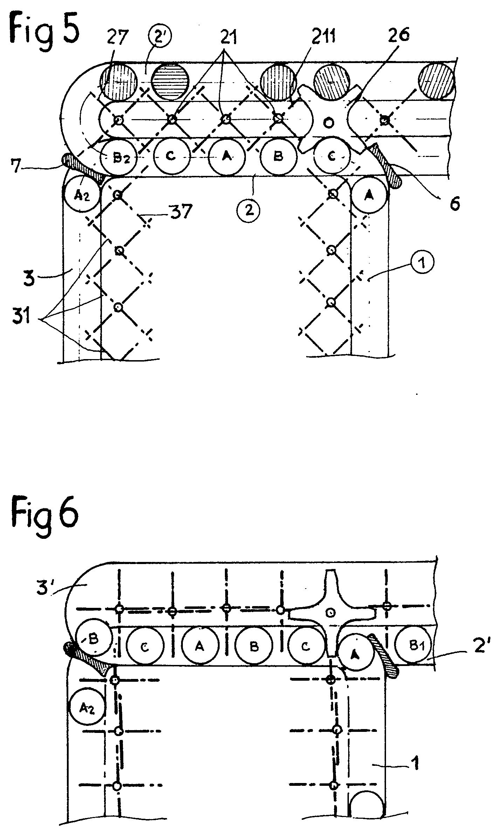

Sur la figure 5, les plateaux ont de nouveau tourné de 1/8ème de tour. Le plateau d'entrée 16 s'est déchargé de la munition B qui a été prise en charge par le plateau suivant 211 de la série de plateaux 21 du couloir 2. En revanche le plateau d'entrée 16 est chargé simultanément de la munition A et de la munition C qui est englobée dans le plateau 26.

En même temps, l'aiguillage 6 s'est mis dans la première position assurant la continuité du couloir amont 1 avec le couloir intermédiaire 2.

Ceci est possible du fait qu'il existe un intervalle libre sur l'arrière de la munition C.

De la sorte, lorsque, après un 1/8ème de tour, on passe dans la position de la figure 6, la munition A s'apprête à pénétrer dans le couloir intermédiaire 2 où les munitions B et C sont complètement engagées.

A la fin du couloir supplémentaire 2' se présente à ce moment, une nouvelle munition B1 de la série B.

Lorsque les plateaux tournent de nouveau de 1/8ème de tour, la munition A vient prendre la place qui était celle de la munition B sur la figure 3. L'aiguillage 6 revient dans la seconde position assurant la continuité du couloir 2' avec le couloir intermédiaire 2 et la munition B1 vient dans la position qui était celle de la munition C sur la figure 3, c'est-à-dire à l'entrée du couloir intermédiaire 2.

On voit qu'ainsi la munition A venant du couloir amont 1 s'est incorporée d'une façon continue dans les munitions se déplaçant à l'intérieur du magasin, l'aiguillage se mettant alternativement dans une position puis dans l'autre pour les passages des munitions venant soit du couloir amont 1 soit du couloir supplémentaire 2'.

Dans l'exemple représenté, chaque munition ordinaire de type A vient s'intercaler entre deux groupes de munitions spéciales maintenues en réserve dans le magasin et comportant chacun deux munitions de type B et C. C'est pourquoi, comme on l'a indiqué, le plateau d'entrée 16 ne doit prendre en charge une munition de type A qu'une fois sur trois. Ceci est obtenu par exemple en faisant en sorte que des munitions de type A qui alimentent le plateau 16 soient séparées les unes des autres dans le couloir amont 1, par deux logements libres.

D'autre part, le fonctionnement qui vient d'être décrit montre que pour chaque cycle, correspondant au passage successif des munitions des trois types A, B et C, l'aiguillage amont 6 doit se trouver dans la première position pendant un tiers du cycle et dans la seconde position pendant les deux autres tiers.

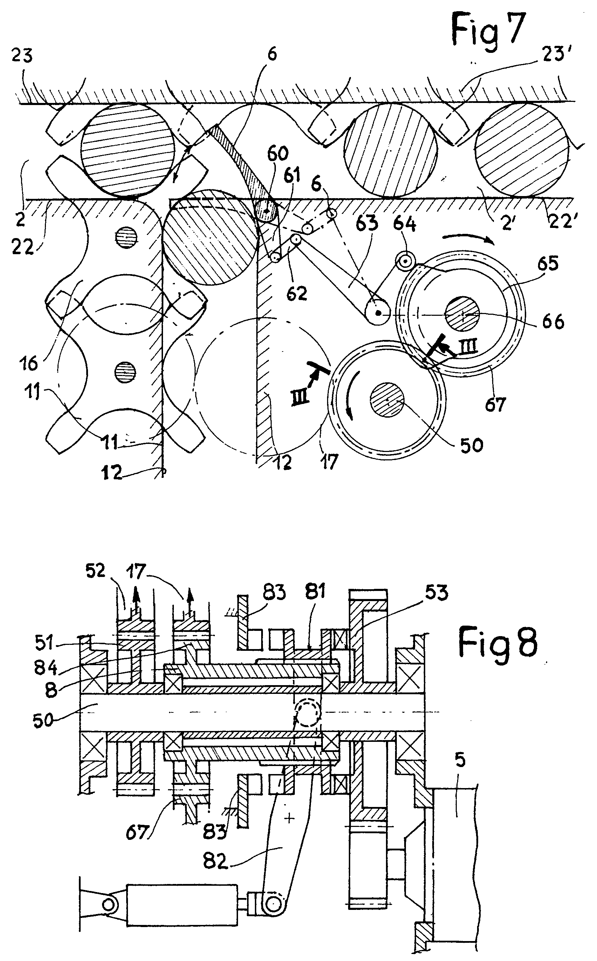

Ceci est obtenu très simplement par un système à came qui a été représenté schématiquement sur la figure 7.

L'aiguillage amont 6 est constitué, comme on l'a indiqué plus haut, de deux bras montés pivotant autour d'un axe 60 placé entre les guides extérieurs 13 et 22' du couloir amont 1 et du couloir supplémentaire 2' et qui viennent se mettre dans le prolongement soit du guide extérieur 22' dans la direction du guide extérieur 22 du couloir intermédiaire 2, soit du guide extérieur 18 dans la direction du guide intérieur 23 du couloir 2. A cet effet, les bras de l'aiguillage 6 sont munis du côté extérieur d'une face plane et du côté intérieur d'une face concave circulaire qui, dans la première position, représentée en trait plein sur la figure 7 est centrée sur l'axe 160 du plateau d'entrée 16.

Le pivotement de l'aiguillage 6 est commandé par une manivelle 61 reliée par une bielle 62 à l'extrémité d'un levier 63 qui, dans l'exemple représenté, est un levier coudé et dont l'autre extrémité s'appuie, par l'intermédiaire d'un galet 64, sur une came 65.

Le profil de la came 65 est dessiné de façon à commander périodiquement le passage et le maintien de l'aiguillage 6 dans la première position sur un tiers du cycle et dans la seconde position sur les deux autres tiers.

A cet effet, la came 65 est montée sur un arbre 66 entraîné en rotation en synchronisme avec l'ensemble des plateaux des différents couloirs à partir d'une commande mécanique générale de telle sorte que l'arbre 66 fasse un tour complet chaque fois que les plateaux ont tourné de 3/4 de tour et ont par conséquent commandé l'avancement de 3 munitions ce qui correspond à 1 cycle dans l'exemple représenté.

La commande mécanique sera décrite plus en détails par la suite, en se référant à la figure 8.

La sortie des munitions du couloir intermédiaire 2 se fait, à l'extrémité aval de celui-ci, d'une façon analogue à celle qui vient d'être décrite pour l'entrée des munitions.

Sur la figure 3, on a représenté l'arrivée d'une munition de type A dans le plateau de sortie 37 qui prend en charge la munition A en même temps que le dernier plateau 27 du couloir intermédiaire 2 et la transfère ensuite dans le couloir aval 3 dont il constitue le premier plateau. L'aiguillage 7 se trouve alors, comme on l'a représenté sur la figure 3, dans la première position assurant la continuité du couloir intermédiaire 2 avec le couloir aval 3. Par conséquent, la rotation des plateaux fait sortir la munition A2 du magasin comme indiqué sur la figure 4. Lorsque les plateaux ont tourné d'un quart de tour pour se placer dans la position de la figure 5, la munition A2 se trouve à l'entrée du couloir aval 3 et l'aiguillage 7 se place dans la seconde position de continuité du couloir 2 avec le couloir supplémentaire 2', tandis que le plateau de sortie 37 prend en charge la munition B2 en même temps que le plateau 27 (figure 5).

Ainsi, lorsque les plateaux continuent à tourner, la munition B2 sort du couloir 2 pour pénétrer dans le couloir supplémentaire 2' du magasin tandis que la munition A2 s'incorpore à la suite des plateaux 31 du couloir aval 3 de façon à être conduite vers le canon. L'aiguillage 7 est maintenu dans la même seconde position pour le passage de C (figure 6) puis revient dans la première position pour le passage de la munition A suivante. Ainsi, de même que le couloir amont 1 contenait des munitions de type A séparées par deux logements libres, le couloir aval 3 contient également des munitions de type A séparées par deux logements libres.

L'aiguillage 7 doit être placé, comme l'aiguillage 6, dans la première position pendant un tiers du cycle et dans la seconde position pendant les deux autres tiers.

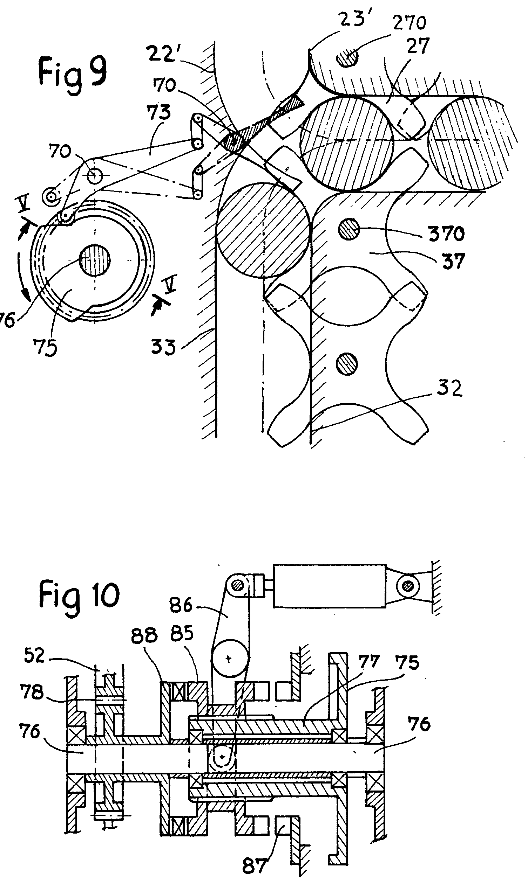

Sa commande est réalisée d'une façon analogue à celle qui a été décrite pour l'aiguillage 6 par l'intermédiaire d'un levier 73 commandé par une came 75 calée sur un arbre 76 entraînée en rotation par la commande mécanique générale de façon à faire un tour complet chaque fois que les plateaux ont tourné de 3/4 de tour (figures 9 et 10).

L'aiguillage 7 se compose également de bras montés pivotant autour d'un axe 70 placé entre les guides extérieurs 33 du couloir 3 et 22' du couloir 2' et munis de faces circulaires concaves qui se placent alternativement dans le prolongement des guides 33 et 22' et sont donc centrés respectivement sur l'axe 370 du plateau de sortie 37 dans la première position et sur l'axe 270 du plateau 27 dans la seconde position.

Le processus qui vient d'être décrit permet ainsi d'alimenter d'une façon continue le couloir aval 3 par des munitions de type A introduites par le couloir amont 1 tout en gardant en réserve des munitions de type B et C dans le magasin 20.

Le chargement du magasin en munitions de type B et C se fait à partir du couloir amont 1, les aiguillages 6 et 7 étant placés dans les positions des figures 5 et 6. D'autre part, le couloir aval 3 doit pouvoir être alimenté par les munitions de type B et C gardées en réserve, les aiguillages 6 et 7 étant alors dans les positions des figures 3 et 4. C'est pourquoi les commandes des aiguillages 6 et 7 doivent pouvoir être débrayées de façon à maintenir ceux-ci, selon les besoins dans l'une ou l'autre position.

La commande mécanique des aiguillages 6 et 7 est représentée schématiquement, respectivement sur les figures 8 et 10.

Sur la figure 8 qui représente la commande des plateaux et de l'aiguillage amont 6, on a représenté schématiquement le moteur de commande générale 5 qui entraîne, par l'intermédiaire d'un réducteur, un arbre 50 sur lequel sont centrés les différents pignons.

En effet, l'arbre 50 entraîne directement, par l'intermédiaire d'un pignon 51, une chaîne cinématique représentée par son premier pignon 52 et qui est constituée d'une série de pignons de même rayon engrenant les uns sur les autres et commandant en synchronisme la rotation des plateaux du magasin 20 et, également, du couloir aval 3 par l'intermédiaire d'une commande représentée sur la figure 10 qui sera décrite plus loin.

Les rapports des cercles primitifs sont réglés de telle façon que si l'arbre 50 tourne à n tours par minute, les plateaux sont entraînés à une vitesse de 4n/3 tours/minute.

D'autre part, sur l'arbre 50 tourne librement, par l'intermédiaire de roulements, une douille 8 qui est munie de canelures lui permettant d'être entraînée par un crabot 81 monté coulissant longitudinalement.

Une fourchette 82 actionnée d'une façon classique, par exemple par un vérin, permet de solidariser le crabot 81 en rotation soit avec une partie fixe 83 permettant d'immobiliser la douille 8, soit avec un pignon d'entraînement 53 calé sur l'arbre 50. De la sorte, selon la position du crabot 81, la douille 8 peut être soit immobilisée, soit entraînée en rotation à la vitesse de l'arbre 50.

D'autre part, la douille 8 est solidaire d'un pignon 84 qui engrène d'une part avec un pignon 67 calé sur l'arbre 66 d'entraînement de la came 65 (figure 7) et d'autre part avec le pignon amont 17 d'une chaîne cinématique d'entraînement en synchronisme de la série de plateaux 11 du couloir amont 1.

Les pignons 84 et 67 ont même rayon primitif de telle sorte que les arbres 50 et 66 tournent à la même vitesse. En revanche, les rayons primitifs des pignons 84 et 17 sont réglés dans un rapport tel qu'à chaque tour de l'arbre 50 corresponde une rotation de 4/3 de tour des plateaux 11 du couloir amont.

On notera d'autre part que le plateau d'entrée 16 est entraîné en rotation en permanence par l'intermédiaire de la chaîne cinématique 52 de commande du magasin.

La disposition qui vient d'être décrite permet donc de stopper le couloir amont 1 et de bloquer l'aiguillage 6 dans la seconde position de continuité du magasin sans arrêter l'entraînement des plateaux du magasin 20 et du couloir aval 3. Il est ainsi possible d'alimenter le couloir aval 3 par les munitions spéciales gardées en réserve dans le magasin 20.

Cependant, il faut dans ce cas que l'aiguillage aval 7 reste bloqué dans la seconde position de continuité du couloir intermédiaire 2 avec le couloir aval 3. Ceci est obtenu grâce à une disposition analogue représentée schématiquement sur la figure 10.

La came 75 de commande de l'aiguillage aval 7 est fixée sur une douille 77 qui est portée par l'intermédiaire de roulements sur un arbre 76. La douille 77 peut d'autre part être entraînée en rotation par un crabot 85 qui engrène sur des cannelures ménagées sur la douille et qui est actionné par une fourchette 86 lui permettant d'être solidarisé soit avec une partie fixe 87, soit avec un pignon 88 calé sur l'arbre 76.

Ce dernier est solidaire d'un pignon 78 relié par l'intermédiaire de la chaîne cinématique 52 à l'arbre moteur 50.

Les rapports des pignons sont choisis de telle sorte que l'arbre 76 tourne à la même vitesse que l'arbre moteur 50.

Ce dispositif permet donc, selon la position du crabot 85, soit de commander la rotation de la came 75 à la même vitesse que la came 65 de l'aiguillage amont 6, soit d'immobiliser la came et par conséquent l'aiguillage 7 dans une position déterminée. Il est donc possible de bloquer l'aiguillage 7 soit dans la première position pour alimenter le couloir aval par les munitions spéciales gardées en réserve dans le magasin, soit dans la seconde position, par exemple, pour le chargement du magasin en munitions spéciales.

L'invention a été décrite en se référant à un mode de réalisation schématique qui devrait évidemment être adapté aux caractéristiques de l'installation que l'on désirerait équiper d'un magasin de réserve.

Ainsi, comme on l'a indiqué, l'invention s'adapte particulièrement bien à l'alimentation en munition d'une tourelle d'artillerie comportant un affût fixe et une masse oscillante supportant le tube du canon.

Dans cette disposition, le couloir amont 1 et le magasin 20 comportant le couloir intermédiaire 2 et le couloir supplémentaire 2' sont placés dans l'affût fixe, alors que le couloir aval 3 est monté dans un châssis solidaire de la masse oscillante et tournant avec celle-ci autour d'un axe des tourillons.

Selon une caractéristique de l'invention, le magasin est disposé de telle sorte que l'axe 370 du plateau de sortie 37 coïncide avec l'axe des tourillons. De plus, le plateau de sortie 37 et le plateau suivant 34 du couloir aval 3 sont placés de part et d'autre de celui-ci.

On a déjà indiqué que le plateau de sortie 37 est entraîné en synchronisme et en sens inverse avec les plateaux 21 du magasin 20 par exemple au moyen de deux roues dentées de même diamètre calées respectivement sur les arbres 370 du plateau de sortie 37 et 270 du dernier plateau 27 du magasin 20 et engrenant l'une dans l'autre.

De la même façon, sur les arbres 370 du plateau de sortie 37 et 340 du plateau suivant 34 du couloir aval 3 sont calées deux roues dentées 371 et 271 ayant des diamètres primitifs égaux à l'entraxe des plateaux 37 et 34.

De la sorte, lorsque l'on oriente le couloir aval 3 autour de l'axe des tourillons 370, la roue d'entrée 341 d'entraînement du plateau 34 roule sur la roue dentée 371 du plateau de sortie 37. Ainsi, quelle que soit l'orientation du couloir aval 3, le plateau 34 est toujours entraîné en synchronisme avec le plateau 37 mais en sens inverse. Par ailleurs, de façon classique, le plateau 34 entraîne en synchronisme les autres plateaux 31 du couloir aval 3 par exemple au moyen de pignons de même diamètre liés par des pignons intermédiaires.

Le mouvement de rotation synchronisé peut ainsi être transmis du couloir amont 1 au magasin 20 puis, par l'intermédiaire du plateau 37, au couloir mobile 3 à partir du moteur d'entraînement commun 5.

Cependant, la roue dentée 341 est liée à l'axe du plateau 34 par un accouplement débrayable qui permet, comme on l'a indiqué plus haut, de débrayer le couloir aval 3 lorsque l'aiguillage 7 est en position de continuité avec le couloir supplémentaire 2' du magasin 20.

La continuité entre le couloir intermédiaire 2 et le couloir aval mobile 3 est assurée par un couloir de liaison incurvé 4 limité par deux guides parallèles assurant la continuité, l'un entre les guides 22 et 23 et l'autre entre le guide 23 et 32, respectivement du couloir intermédiaire 2 et du couloir aval 3. Selon une caractéristique de l'invention, le couloir de liaison incurvé 4 est constitué par une première partie 40 formant une courbe circulaire centrée sur l'axe 370 du plateau de sortie 37 et une seconde partie 41 formant une contre-courbe circulaire centrée sur l'axe 340 du premier plateau 34 de la série de plateaux 31 du couloir aval 3. Les cercles primitifs des roues dentées 371 et 341 d'entraînement des plateaux 37 et 34 suivent la ligne médiane des deux parties 40 et 41 du couloir de liaison 4.

Les deux guides parallèles limitant les deux parties courbes 40 et 41 sont tangents, à leurs extrémités, respectivement aux rails de guidage des deux couloirs fixe 2 et mobile 3 et comportent des points d'inflexion A et B placés dans le plan P passant par les axes 370 du plateau 37 et 340 du plateau 34.

Comme le couloir mobile 3 tourne autour de l'axe 370, les guides correspondant à la courbe 40 centrée sur l'axe 370 doivent avoir une longueur variable.

Du côté de l'axe 370, ce résultat peut être obtenu en prolongeant les rails de guidage 22 par des rails circulaires 220 centrés sur l'axe 370 et tournant autour de celui-ci. Le reste du guidage correspondant à la contre-courbe 41 est constitué par des rails circulaires 320 fixés dans le prolongement des rails de guidage 32 du couloir aval 3 et se raccordant de façon tangentielle aux rails 220 de la partie courbe 40.

L'un des guidages du couloir de liaison 4 est donc constitué des rails 220 et 320, les rails 220 ayant une longueur active comprise entre l'extrémité C du couloir intermédiaire 2 et le point d'inflexion B dont la position le long des rails 220 dépend de l'orientation du couloir aval 3.

Un tel système ne peut être utilisé pour le guidage opposé qui se raccorde aux guides 23 et 33 des couloirs 2 et 3. C'est pourquoi on utilise un système original représenté sur les dessins.

A l'extrémité de chacun des rails du guidage 23 est fixée une chaîne 42 dont l'extrémité 421 est fixée sur l'extrémité du guide extérieur 22' du magasin 20, à proximité de l'axe 70 de pivotement de l'aiguillage 7 et dont une partie 423 forme une courbe circulaire centrée sur l'axe 370 et placée dans le prolongement de l'aiguillage 7 et du guide intérieur 23 du magasin, alors que l'autre partie 422 vient se loger en coulissant à l'intérieur d'un magasin 43 constitué par un couloir rectiligne solidaire du couloir mobile 3 et muni d'une extrémité courbe 430 qui se raccorde tangentiellement avec le profil circulaire de la partie 423 de la chaîne, en formant un point de rebroussement D avec un guidage incurvé comprenant une partie circulaire 330 centrée sur l'axe 370 et se raccordant au point d'inflexion A sur une partie circulaire 331 centrée sur l'axe 340 et se raccordant elle-même au guidage 33 du couloir aval 3.

Ainsi, le guide extérieur du couloir de liaison 4 est constitué successivement par l'aiguillage 7, la partie 423 de la chaîne 42 et le guidage incurvé 330, 331 et il a une longueur variable puisque la partie 422 de la chaîne 42 vient se mettre en réserve dans le magasin 43 et peut sortir du magasin ou y rentrer selon l'orientation du couloir mobile 3.

Le passage de la chaîne dans le magasin est assuré par un pignon de guidage 9 monté rotatif sur le châssis du couloir mobile 3 autour d'un axe 90 placé dans un plan P1 passant par l'axe 390 d'articulation et par le point de rebroussement D où la partie 423 et la chaine 42 se raccorde à l'extrémité de la partie 330 du guide 33.

A chaque rail guidage 23 est fixée une chaîne 42 associée à un magasin 43 et à un pignon 9. De préférence, les deux pignons 9a, 9b sont dentés et engrènent sur les deux chaînes 42a, 42b qui sont du type Galle.

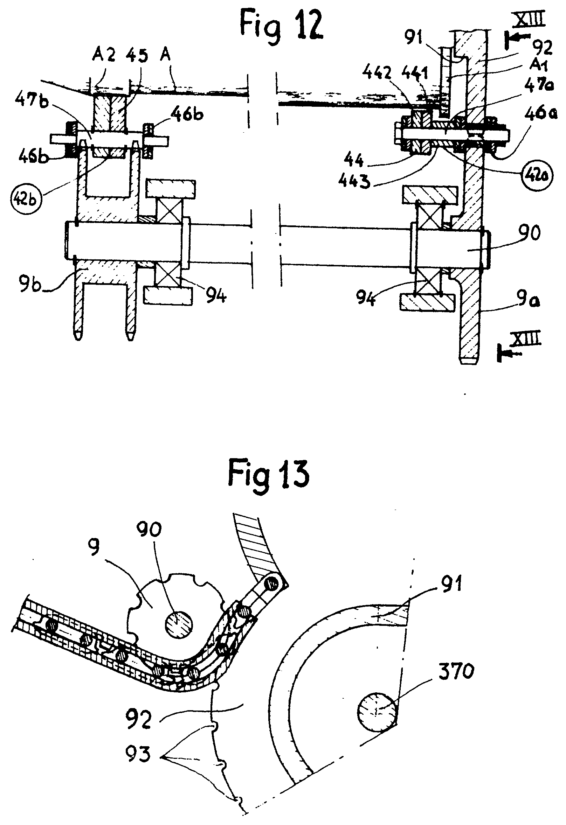

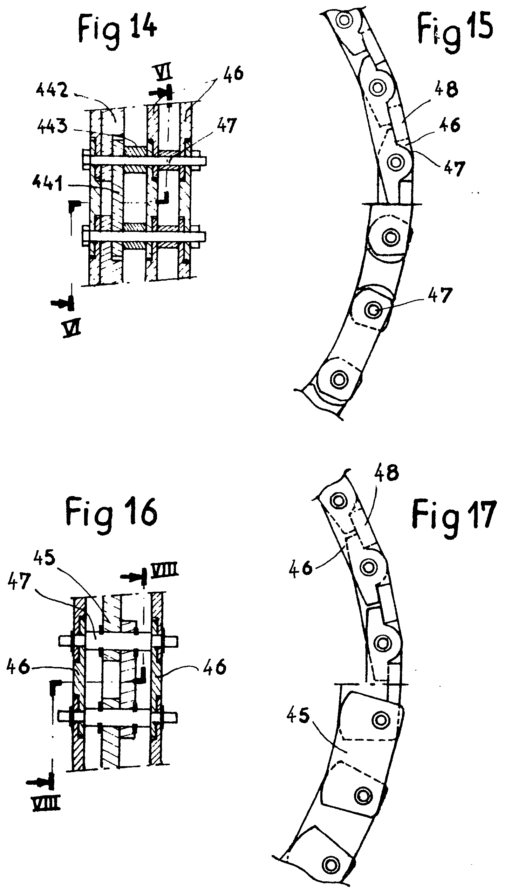

Les deux chaînes 42a et 42b sont représentées plus en détail sur les figures 12 à 17.

La figure 12 est une coupe selon le plan P1 passant par l'axe 370 d'articulation et l'axe 90 du pignon 9. On a représenté schématiquement une munition A comprenant notamment vers l'arrière un plateau de douille A1 près duquel s'appuie le rail arrière du guidage interne ou externe du couloir et vers l'avant un sertissage A2 sur lequel s'appuie le rail avant du guidage. Par conséquent, de la même façon, dans le couloir de liaison 4, la munition s'appuiera vers l'extérieur sur une partie 45 de la chaîne arrière 43a et sur une partie 44 de la chaîne avant 42b.

De façon classique, chaque chaîne, de type Galle, est constituée d'une série de maillons comportant chacun deux flancs 46 reliés par des axes 47.

La partie d'appui 44 de la chaîne arrière 42a a pour objet non seulement de soutenir la munition pendant son trajet dans le couloir de liaison 4, mais également de servir de talon de guidage axial avant en prenant appui sur le plateau de douille, le guidage axial arrière étant assuré par un bossage 91 ménagé sur un pignon 92 qui est représenté sur les figures 12 et 13 et sur lequel s'appuie la chaîne arrière 42a de façon à prendre la forme voulue d'un cercle centré sur l'axe 370 (figure 4). De ce fait, les deux flancs 46a de la chaîne 42a sont placés 43a sont placés sur le côté de la chaîne de part et d'autre du pignon 92, celui-ci étant muni d'encoches 93 qui engrènent sur les axes 47a de la chaîne. Lesdits axes sont prolongés vers l'avant de façon à soutenir une série de lamelles 441-442 qui constituent la partie d'appui 44 de la chaîne et qui sont maintenues écartées des flancs 46 par des douilles d'écartement 443.

Le pignon 9a centré sur l'axe 90 et assurant le guidage de la chaîne arrière 42a est placé dans le même plan que le pignon fixe d'appui 92, sur l'arrière de la munition.

L'axe 90, qui tourne dans des paliers 94 montés sur le châssis non représenté du couloir mobile 3 porte à son autre extrémité le pignon 9b des guidages de la chaîne avant 42b.

Celle-ci, n'ayant pour rôle que d'assurer le guidage de la munition le long du couloir, peut être symétrique, la partie d'appui 45 étant placée entre les deux flancs 46b.

Il n'est pas indispensable d'appuyer la chaîne avant 42b sur un plateau fixe car elle peut prendre naturellement la forme circulaire désirée grâce à des cales 48 permettant aux maillons de s'appuyer les uns sur les autres, comme on l'a représenté sur les figures 6 et 8.

Cependant, si on le juge utile, on pourrait, comme cela a été décrit pour la chaîne arrière, utiliser un plateau d'appui qui devrait seulement être conformé de façon à laisser le passage des munitions.

Bien entendu, l'invention ne se limite pas aux détails des modes de réalisation qui ont été décrits et qui pourraient donner lieu à d'autres variantes notamment en employant des moyens équivalents.

Par exemple, il serait possible de modifier la constitution du magasin de façon à charger celui-ci d'une autre façon. En effet, les possibilités de répartition des munitions spéciales dépendent arithmétiquement du nombre d'emplacements du magasin.

En outre, on a décrit un mode de réalisation particulièrement compact puisque l'utilisation de plateaux à quatre alvéoles permet de faire commander à ceux-ci l'avancement des munitions simultanément dans les deux parties du magasin. Cependant, on aurait pu aussi imaginer un magasin plus encombrant dans lequel le couloir intermédiaire et le couloir supplémentaire formant les deux parties du magasin seraient munis chacun d'une série de plateaux propres. Dans ce cas, on ne serait pas obligé d'incorporer les munitions ordinaires au milieu des munitions spéciales. Celles-ci seraient maintenues en réserve dans le couloir supplémentaire, dont les plateaux seraient débrayés pendant l'alimentation du couloir aval par les munitions ordinaires venant du couloir amont. En débrayant celui-ci, il serait possible d'alimenter le couloir aval par les munitions maintenues en réserve dans le couloir supplémentaire et empruntant à cet effet le couloir intermédiaire.

Enfin, on a décrit l'invention en se référant à des plateaux en croix de Malte à quatre alvéoles, mais il est bien évident que l'invention serait utilisable avec d'autres types de plateaux ou avec des chaînes en faisant les adaptations nécessaires.

**Revendications**

1. Dispositif de transport d'une suite d'objets cylindriques tels que des munitions au moyen d'une série d'organes d'entraînement rotatifs constitués chacun d'au moins deux plateaux à alvéoles écartés calés sur un arbre, lesdits arbres étant entraînés en rotation en synchronisme, et disposés parallèlement et à égale distance les uns des autres le long d'une surface cylindrique parallèle à deux organes de guidage, respectivement interne et externe, écartés d'une distance au moins égale au diamètre des objets, l'organe de guidage interne étant placé le long d'une surface enveloppant les fonds des alvéoles des plateaux, l'ensemble formant un couloir d'acheminement des objets par déplacements successifs équipé d'un magasin comportant à sa sortie un aiguillage, caractérisé par le fait que le couloir d'acheminement est constitué de trois parties successives formant respectivement un couloir amont (1), un couloir intermédiaire (2) et un couloir aval (3), que le couloir intermédiaire (2) est constitué par une partie d'un magasin (20) dont l'autre partie est constituée par un couloir supplémentaire 2' qui se referme à ses deux extrémités sur le couloir intermédiaire (2) de façon à former un couloir fermé limité par des organes de guidage interne (23') et externe (22') disposés dans le prolongement des organes de guidage (23, 22) du couloir intermédiaire (2) et associés à une série (21) de plateaux à alvéoles formant une chaîne fermée d'alvéoles avec les plateaux du couloir intermédiaire, l'organe de guidage externe (22') étant interrompu à l'entrée et à la sortie du couloir intermédiaire (2) respectivement pour le passage des objets venant du couloir amont (1) et allant vers le couloir aval (3) et que le magasin est associé à deux aiguillages (6, 7) placés respectivement aux extrémités du couloir intermédiaire (2) et à des moyens individuels d'orientation des deux aiguillages amont (6) et aval (7) alternativement dans une première position assurant la continuité du couloir intermédiaire (2) respectivement avec le couloir amont (1) et avec le couloir aval (3) et une seconde position assurant la continuité du couloir intermédiaire (2) avec le couloir supplémentaire (2') formant l'autre partie du magasin.

2. Dispositif de transport d'objets selon la revendication 1, caractérisé par le fait que le magasin (20) comportant n emplacements successifs, il est partiellement rempli d'objets B, C maintenus en réserve et régulièrement répartis en a groupes comprenant chacun b objets et séparés chacun des groupes adjacents par un emplacement libre, n, a et b étant des nombres entiers tels que n = (b + 1) a, et que les objets ordinaires A venant du couloir amont (1) viennent s'intercaler pendant leur trajet dans le couloir intermédiaire (2) dans les espaces libres laissés entre les groupes d'objets B, C en réserve.

3. Dispositif de transport d'objets selon la revendication 2, caractérisé par le fait que les objets A acheminés dans le couloir amont sont séparés chacun du suivant par b emplacements libres et que les organes d'entraînement (21, 11) du magasin (20) et du couloir amont (1) sont commandés en synchronisme et réglés de telle sorte que l'arrivée dans le couloir intermédiaire (2) d'un objet A venant du couloir amont (1) coïncide avec le passage d'un emplacement libre du magasin (20), l'aiguillage amont (6) étant placé successivement dans la première position de continuité du couloir amont (1) avec le couloir intermédiaire (2) pour le passage de chaque objet A venant du couloir amont (1) et dans la seconde position de continuité du magasin (20) pour le passage des b objets B, C en réserve et ainsi de suite alternativement, l'aiguillage aval (7) étant commandé de la même façon avec un décalage correspondant au nombre d'emplacements du couloir intermédiaire (2).

4. Dispositif de transport d'objets selon l'une des revendications 1, 2, 3, caractérisé par le fait que les deux aiguillages (6 et 7) sont associés chacun à un plateau, respectivement d'entrée (16) et de sortie (37) placé à l'extérieur du couloir fermé constituant le magasin (20), lesdits plateaux d'entrée (16) et de sortie (37) constituant respectivement le dernier plateau du couloir amont (1) et le premier plateau du couloir aval (3).

5. Dispositif de transport d'objets selon la revendication 4, caractérisé par le fait qu'il comprend un moyen de commande générale en synchronisme de la rotation des plateaux (11, 21, 31) du couloir amont (1), du magasin (20) et du couloir aval (3) et des moyens d'accouplement débrayables respectivement des plateaux du couloir amont (1) et du couloir aval (3) à l'exception du plateau d'entrée (16) et du plateau de sortie (37) qui sont entraînés en permanence avec les plateaux du magasin (20).

6. Dispositif de transport d'objets selon la revendication 1, caractérisé par le fait que le couloir intermédiaire (2) et le couloir supplémentaire (2') constituant le magasin (20) sont placés de part et d'autre d'une même série de plateaux (21) munis chacun d'une pluralité d'alvéoles de telle sorte que les mêmes plateaux (21) assurant le déplacement des objets simultanément dans le couloir intermédiaire (2) et dans le couloir supplémentaire (2'), ceux-ci formant ensemble un barillet aplati autour de la ligne de plateaux à alvéoles (21).

7. Dispositif de transport de munitions selon la revendication 4, pour l'alimentation d'une tourelle d'artillerie comprenant un affût fixe sur lequel une masse oscillante supportant le canon est articulée autour d'un axe des tourillons, le couloir amont (1), le couloir intermédiaire (2) et le couloir supplémentaire (2') étant placés dans l'affût fixe et le couloir aval (3) étant solidaire de la masse oscillante pour l'alimentation du canon, caractérisé par le fait que l'axe de rotation (370) du plateau de sortie (37) du couloir intermédiaire (2) coïncide avec l'axe des tourillons, que le plateau de sortie (37) et le plateau suivant (34) du couloir aval (3) sont placés de part et d'autre du couloir aval (3) et que le couloir intermédiaire (2) et le couloir aval (3) sont reliés par un couloir de liaison incurvé (4) formant successivement une première partie (40) formant une courbe circulaire de longueur variable centrée sur l'axe du plateau de sortie (37) et se raccordent tangentiellement sur le couloir intermédiaire (2) et une deuxième partie (41) formant une contre-courbe circulaire centrée sur l'axe du plateau suivant (34) du couloir aval (3) et se raccordant tangentiellement, vers l'amont sur la courbe (40) en formant un point d'inflexion et vers l'aval sur le couloir aval (3).

8. Dispositif de transport de munitions selon la revendication 7, caractérisé par le fait que le couloir de liaison incurvé (4) est limité par deux paires de guides parallèles se raccordant respectivement aux guides (22) et (23) du couloir fixe (2) et du couloir mobile (3) et ayant chacun la forme d'un premier arc de cercle de longueur variable (220, 330, 421) centré sur l'axe du plateau de sortie (37), suivi d'un second arc de cercle (320, 331) centré sur l'axe du plateau suivant (34) du couloir mobile (3).

9. Dispositif de transport de munitions selon la revendication 8, caractérisé par le fait que la paire de guides de la partie (40) du couloir de liaison (4) centrée sur le plateau de sortie (37) est constituée sur au moins une partie du premier arc de cercle de longueur variable par deux chaînes (42a, 42b) de type GALLE dont une extrémité (421) est reliée au guide extérieur (22') du magasin (20) dans le prolongement de l'aiguillage de sortie (7) et dont l'autre extrémité (422) vient se loger par coulissement dans un couloir (43) formant magasin et solidaire en rotation du couloir mobile (3), sur une longueur variable dépendant de la position angulaire du couloir mobile (3).

10. Dispositif de transport de munitions selon la revendication 9, caractérisé par le fait qu'au moins l'une des chaînes (42a) s'appuie dans sa partie circulaire sur une roue (42) calée sur l'arbre (370) du plateau de sortie (37).

11. Dispositif de transport de munitions selon la revendication 9, caractérisé par le fait que le couloir mobile (3) est muni de deux pignons (9) de guidage, chacun, d'une chaîne (43) correspondante, lesdits pignons (9) étant centrés sur des axes (90) placés chacun dans un plan P1 passant par l'axe des tourillons (370) et par le point D de jonction entre l'extrémité de guidage mobile (330) et la chaîne (42).

12. Dispositif de transport de munitions selon la revendication 8, caractérisé par le fait que le plateau de sortie (37) et le plateau suivant (34) du couloir mobile (3) sont entraînés en rotation à la même vitesse et en sens contraire, quelle que soit l'orientation du couloir mobile, par l'intermédiaire de roues dentées (371) (341) calées sur les arbres (370) (340) desdits plateaux (37) et (34) et engrenant l'une dans l'autre, lesdites roues ayant des diamètres primitifs égaux à l'entr'axe desdits arbres (370) et (340).

**Claims**

1. Device for conveying a series of cylindrical objects, such as ammunition, by means of a series of rotary drive members each consisting of at least two spaced star wheels fastened on a shaft, said shafts being driven rotationally in synchronism and disposed parallel and equidistantly in relation to one another along a cylindrical surface parallel to two guide members, which are respectively the inner and the outer guide member and are spaced apart by a distance at least equal to the diameter of the objects, the inner guide member being placed along a surface enveloping the bottoms of the lobes of the star wheels and the whole arrangement forming a corridor for conducting the objects by successive displacements and being equipped with a magazine having a deflector at its outlet, characterised by the fact that the conducting corridor is composed of three successive parts forming respectively an upstream corridor (1), an intermediate corridor (2), and a downstream corridor (3), that the intermediate corridor (2) is composed of part of a magazine (20) of which the other part is composed of a supplementary corridor 2' which is closed at its two ends in relation to the intermediate corridor (2) in such a manner as to form a closed corridor bounded by an inner guide member (23') and an outer guide member (22'), these guide members being disposed in line with the guide members (23, 22) of the intermediate corridor (2) and being associated with a series (21) of star wheels forming, together with the wheels of the intermediate corridor, a closed chain of lobes, while the outer guide member (22') is interrupted at the inlet and the outlet of the intermediate corridor (2) respectively for the passage of the objects coming from the upstream corridor (1) and going to the downstream corridor (3), and the magazine is associated with two deflectors (6, 7) placed respectively at the ends of the intermediate corridor (2) and with individual means for orienting the upstream deflector (6) and the downstream deflector (7) alternately to a first position ensuring the continuity of the intermediate corridor (2) respectively with the upstream corridor (1) and with the downstream corridor (3), and a second position ensuring the continuity of the intermediate corridor (2) with the supplementary corridor (2') forming the other part of the magazine.

2. Device for conveying objects according to Claim 1, characterised by the fact that the magazine (20) comprises n successive places and is partially filled with objects B, C held in reserve and regularly distributed in a groups each comprising b objects, each group being separated from adjacent groups by a free place, n, a, and b being whole numbers such that n = (b + 1) a, and that the ordinary objects A coming from the upstream corridor (1) are intercalated, during their passage through the intermediate corridor (2), in the free places left between the groups of objects B, C in reserve.

3. Device for conveying objects according to Claim 2, characterised by the fact that the objects A conducted in the upstream corridor are each separated from the next object by b free places, and that the drive members (21, 11) of the magazine (20) and of the upstream corridor (1) are controlled in synchronism and adjusted in such a manner that the arrival in the intermediate corridor (2) of an object A coming from the upstream corridor (1) coincides with the passage of a free place in the magazine (20), the upstream deflector (6) being placed successively in the first position of continuity of the upstream corridor (1) with the intermediate corridor (2) for the passage of each object A coming from the upstream corridor (1), and in the second position of continuity of the magazine (20) for the passage of b objects B, C in reserve, and so on alternately, while the downstream deflector (7) is controlled in the same way with a phase displacement corresponding to the number of places in the intermediate corridor (2).

4. Device for conveying objects according to one of Claims 1, 2 and 3, characterised by the fact that the two deflectors (6 and 7) are associated with, respectively, an inlet wheel (16) and an outlet wheel (37) situated outside the closed corridor constituting the magazine (20), the inlet wheel (16) and the outlet wheel (37) constituting respectively the last wheel in the upstream corridor (1) and the first wheel in the downstream corridor (3).

5. Device for conveying objects according to Claim 4, characterised by the fact that it comprises a general synchronous control means for the rotation of the wheels (11, 21, 31) of the upstream corridor (1), of the magazine (20) and of the downstream corridor (3) and also disconnectable coupling means of, respectively, the wheels of the upstream corridor (1) and of the downstream corridor (3) with the exception of the inlet wheel (16) and of the outlet wheel (37), which are driven permanently together with the wheels of the magazine (20).

6. Device for conveying objects according to Claim 1, characterised by the fact that the intermediate corridor (2) and the supplementary corridor (2') constituting the magazine (20) are placed on each side of one and the same series of wheels (21) each provided with a plurality of lobes in such a manner that the same wheels (21) effect the displacement of the objects simultaneously in the intermediate corridor (2) and in the supplementary corridor (2'), these corridors forming a flattened barrel around the line of star wheels (21).

7. Device for conveying ammunition according to Claim 4, for supplying an artillery turret comprising a fixed mount on which an oscillating mass supporting the gun is pivoted about an axis of the trunnions, the upstream corridor (1), the intermediate corridor (2) and the supplementary corridor (2') being disposed in the fixed mount and the downstream corridor (3) being fastened to the oscillating mass for feeding the gun, characterised by the fact that the axis of rotation (370) of the outlet wheel (37) of the intermediate corridor (2) coincides with the axis of the trunnions, that the outlet wheel (37) and the following wheel (34) of the downstream corridor (3) are disposed one on each side of the downstream corridor (3), and that the intermediate corridor (2) and the downstream corridor (3) are connected by an incurved connecting corridor (4) forming in succession a first part (40) forming a circular curve of variable length, centred on the axis of the outlet wheel (37) and connected tangentially to the intermediate corridor (2), and a second part (41) forming a circular counter-curve centred on the axis of the following wheel (34) of the downstream corridor (3) and connected tangentially in the upstream direction to the curve (40), forming a point of inflexion in the downstream direction on the downstream corridor (3).

8. Device for conveying ammunition according to Claim 7, characterised by the fact that the incurved connecting corridor (4) is bounded by two pairs of parallel guides connected respectively to the guides (22) and (23) of the fixed corridor (2) and movable corridor (3) and each having the shape of a first arc of a circle of variable length (220, 330, 421) centred on the axis of the outlet wheel (37), followed by a second arc of a circle (320, 331) centred on the axis of the following wheel (34) of the movable corridor (3).

9. Device for conveying ammunition according to Claim 8, characterised by the fact that the pair of guides of the part (40) of the connecting corridor (4) which is centred on the outlet plate (37) is composed, over at least a part of the first arc of a circle of variable length, of two chains (42a, 42b) of the GALLE type, of which one end (421) is connected to the outer guide (22') of the magazine (20) in line with the outlet deflector (7), while the other end (422) takes up position by sliding, in a corridor (43) forming a magazine and rotationally fixed to the movable corridor (3), over a variable length depending on the angular position of the movable corridor (3).

10. Device for conveying ammunition according to Claim 9, characterised by the fact that at least one of the chains (42a) is supported in its circular portion on a wheel (42) fastened on the shaft (370) of the outlet plate (37).

11. Device for conveying ammunition according to Claim 9, characterised by the fact that the movable corridor (3) is provided with two guide pinions (9) each guiding a corresponding chain (43), these pinions (9) being centred on pins (90), each of which is disposed in a plane P1 passing through the axis of the trunnions (370) and through the junction point D between the end of the movable guide (330) and the chain (42).

12. Device for conveying ammunition according to Claim 8, characterised by the fact that the outlet wheel (37) and the following wheel (34) of the movable corridor (3) are driven rotationally at the same speed and in opposite directions, whatever the orientation of the movable corridor, with the aid of gears (371) (341) fastened on the shafts (370) (340) of the said wheels (37) and (34) and meshing with one another, the said gears having primitive diameters equal to the distance between the axes of the said shafts (370) and (340).

**Ansprüche**

1. Vorrichtung zum Befördern einer Reihe von zylindrischen Gegenständen wie Munition mittels einer Reihe von drehbaren Mitnehmer- bzw. Förderorganen, von welchen jedes aus wenigstens zwei auf einer Welle auseinanderliegenden befestigten Zellenscheiben besteht, wobei die Wellen mit synchroner Drehung angetrieben werden und parallel und im gleichen Abstand voneinander entlang einer zylindrischen Oberfläche angeordnet sind die parallel in bezug auf zwei Führungsorgane verläuft, jeweils ein inneres und ein äußeres, die um einen Abstand voneinander entfernt sind, der wenigstens gleich ist dem Durchmesser der Gegenstände, wobei das innere Führungsorgan entlang einer Fläche angeordnet ist, welche die Zellenböden der Scheiben umhüllt, so daß die Anordnung einen Beförderungsdurchlaß bzw. -kanal für die Gegenstände durch aufeinanderfolgende Verschiebung bildet, der mit einem Magazin versehen ist, das an seinem Auslaß mit einer Weiche bzw. einem Stellwerk versehen ist, dadurch gekennzeichnet, daß der Beförderungsdurchlaß bzw. -kanal von drei aufeinanderfolgenden Abschnitten gebildet wird, die jeweils einen in Bewegungsrichtung aufwärts (stromaufwärts) gelegenen Durchlaß bzw. Kanal (1), einen Zwischendurchlaß bzw. -kanal (2) und einen in Bewegungsrichtung abwärts (stromabwärts) gelegenen Durchlaß bzw. Kanal (3) bilden, daß der Zwischendurchlaß bzw. -kanal (2) vom Abschnitt eines Magazins (20) gebildet wird, dessen anderer Abschnitt von einem zusätzlichen Durchlaß bzw. Kanal (2') gebildet wird, der sich an seinen beiden Enden auf dem Zwischendurchlaß bzw. -kanal (2) so schließt, daß er einen geschlossenen Durchlaß bzw. Kanal bildet, der von inneren Führungsorganen (23') und äußeren Führungsorganen (22') begrenzt wird, die in Fortsetzung der Führungsorgane (23, 22) des Zwischendurchlasses bzw. -kanals (2) angeordnet sind und einer Reihe (21) von Zellenscheiben zugeordnet sind, die eine geschlossene Kette von Zellen mit den Zellenscheiben des Zwischendurchlasses bzw. -kanals bilden, daß das äußere Führungsorgan (22') am Eingang und am Ausgang des Zwischendurchlasses bzw. -kanals (2) jeweils für den Durchgang der vom stromaufwärts gelegenen Durchlaß bzw. Kanal (1) kommenden und zum stromabwärts gelegenen Durchlaß bzw. Kanal (3) geförderten Gegenstände unterbrochen ist und daß dem Magazin zwei Weichen bzw. Stellwerke (6, 7) zugeordnet sind, die jeweils an den Enden des Zwischendurchlasses bzw. -kanals (2) und an individuellen Orientierungseinrichtungen der beiden Weichen bzw. Stellwerke stromaufwärts (6) und stromabwärts (7) angeordnet sind u. zw. alternativ in einer ersten Stellung, in welcher die Kontinuität bzw. der Zusammenhang des Zwischendurchlasses bzw. -kanals (2) jeweils mit dem stromaufwärts gelegenen Durchlaß bzw. Kanal (1) und dem stromabwärts gelegenen Durchlaß bzw. Kanal (3) gewährleistet ist, und in einer zweiten Stellung, in welcher die Kontinuität bzw. der Zusammenhang des Zwischendurchlasses bzw. -kanals (2) mit dem zusätzlichen Durchlaß bzw. Kanal (2') gewährleistet ist, der den anderen Abschnitt des Magazins bildet.

2. Vorrichtung zum Befördern von Gegenständen nach Anspruch 1, dadurch gekennzeichnet, daß das Magazin (20) n aufeinanderfolgende Plätze aufweist und teilweise mit Gegenständen B, C gefüllt ist, die in Reserve gehalten werden und regelmäßig auf a Gruppen aufgeteilt sind, von welchen jede b Gegenstände umfaßt und von allen angrenzenden Gruppen durch einen freien Platz getrennt ist, wobei n, a und b ganze Zahlen wie $n = (b+1) a$ darstellen, und daß die üblichen Gegenstände A, die vom stromaufwärts gelegenen Durchlaß bzw. Kanal (1) kommen, sich auf ihrer Bahn durch den Zwischendurchlaß bzw. -kanal (2) in die freien Plätze einfügen, die zwischen den in Reserve gehaltenen Gruppen von Gegenständen B, C freigelassen sind.

3. Vorrichtung zum Befördern von Gegenständen nach Anspruch 2, dadurch gekennzeichnet, daß die im stromaufwärts gelegenen Durchlaß bzw. Kanal beförderten Gegenstände A jeweils vom darauffolgenden Gegenstand durch b freie Plätze getrennt sind und daß die Mitnehmerorgane (21, 11) des Magazins (20) und des stromaufwärts gelegenen Durchlasses bzw. Kanals (1) synchron angetrieben und so geregelt sind, daß die Ankunft im Zwischendurchlaß bzw. -kanal (2) eines vom stromaufwärts gelegenen Durchlaß bzw. Kanal (1) kommenden Gegenstandes A mit dem Durchlaufen eines freien Platzes des Magazins (20) zusammenfällt, wobei die stromaufwärts gelegene Weiche (6) aufeinanderfolgend in die erste Stellung der Kontinuität bzw. des Zusammenhanges des stromaufwärts gelegenen Durchlasses bzw. Kanals (1) mit dem Zwischendurchlaß bzw. -kanal (2) zum Durchgang jedes vom stromaufwärts gelegenen Durchlaß bzw. Kanal (1) kommenden Gegenstandes A und in die zweite Stellung der Kontinuität des Magazins (20) zum Durchgang von b Gegenständen B, C übergeführt wird, die in Reserve gehalten werden und abwechselnd so fort, wobei die stromabwärts gelegene Weiche (7) auf gleiche Weise mit einer Verstellung betätigt wird, welche der Anzahl der Plätze des Zwischendurchlasses bzw. -kanals (2) entspricht.

4. Vorrichtung zum Befördern von Gegenständen nach einem der Ansprüche 1, 2, 3, dadurch gekennzeichnet, daß die beiden Weichen bzw. Stellwerke (6 und 7) jeweils einem Einlaß-Scheibe (16) und einem Auslaß-Scheibe (37) zugeordnet sind, die außerhalb des geschlossenen Durchlasses bzw. Kanals angeordnet sind, der das Magazin (20) bildet, wobei das Einlaß-Scheibe (16) und das Auslaß-Scheibe (37) jeweils das letzte Scheibe des stromaufwärts gelegenen Durchlasses bzw. Kanals (1) und das erste Scheibe des stromabwärts gelegenen Durchlasses bzw. Kanals (3) bildet.

5. Vorrichtung zum Befördern von Gegenständen nach Anspruch 4, dadurch gekennzeichnet, daß sie ein Haupt-Antriebsorgan zur synchronen Drehung der Scheibe (11, 21, 31) des stromaufwärts gelegenen Durchlasses bzw. Kanals (1), des Magazins (20) und des stromabwärts gelegenen Durchlasses bzw. Kanals (3) aufweist, sowie Kupplungseinrichtungen, die bezüglich der Scheibe des stromaufwärts gelegenen Durchlasses bzw. Kanals (1) bzw. des stromabwärts gelegenen Durchlasses bzw. Kanals (3), mit Ausnahme des Einlaß-Scheibes (16) und des Auslaß-Scheibes (37), die permanent mit den Scheiben des Magazins (20) angetrieben sind, auskuppelbar sind.

6. Vorrichtung zum Befördern von Gegenständen nach Anspruch 1, dadurch gekennzeichnet, daß der Zwischendurchlaß bzw. -kanal (2) und der zusätzliche Durchlaß bzw. Kanal (2'), welche das Magazin (20) bilden, auf beiden Seiten einer Reihe von Scheiben (21) angeordnet sind, von welchen jedes mit einer Mehrzahl von Zellen so versehen ist, daß dieselben Scheibe (21) die Verlagerung bzw. -kanal (2) und im zusätzlichen Durchlaß bzw. Kanal (2'), sichern und daß diese zusammen eine abgeflachte Tonne um die Linie bzw. Reihe von Scheiben (21) mit Zellen bilden.

7. Vorrichtung zum Befördern von Munition nach Anspruch 4, für die Zufuhr an einen drehbaren Artilleriegeschützturm, der mit einer feststehenden Lafette versehen ist, auf der eine das Geschütz abstützende bzw. tragende, pendelnde bzw. oszillierende Masse um eine Drehzapfen-Achse schwenkbar gelagert ist, wobei der stromaufwärts gelegene Durchlaß bzw. Kanal (1), der Zwischendurchlaß bzw. -kanal (2) und der zusätzliche Durchlaß bzw. Kanal (2') in der feststehenden Lafette angeordnet sind und der stromabwärts gelegene Durchlaß bzw. Kanal (3) fest mit der oszillierenden Masse zwecks Beschickung des Geschützes verbunden ist, dadurch gekennzeichnet, daß die Rotationsachse (370) des Auslaß- Scheibes (37) des Zwischendurchlasses bzw. -kanals (2) mit der Drehzapfen-Achse zusammenfällt, daß das Auslaß- Scheibes (37) und das darauffolgende Scheibe (34) des stromabwärts gelegenen Durchlasses bzw. Kanals (3) · beiderseits des stromabwärts gelegenen Durchlasses bzw. Kanals (3) gelegen sind und daß der Zwischendurchlaß bzw. -kanal (2) und der stromabwärts gelegene Durchlaß bzw. Kanal (3) durch einen gekrümmten Verbindungsdurchlaß bzw. -kanal (4) verbunden sind, der aufeinanderfolgend einen ersten Abschnitt (40), der eine kreisförmige Krümmung von variabler Länge bildet, die auf die Achse des Auslaß- Scheibes (37) zentriert ist, und sich tangential an den Zwischendurchlaß bzw. -kanal (2) anschließt, und einen zweiten Abschnitt (41) umfaßt, der eine kreisförmige Gegenkrümmung bildet, die auf die Achse des darauffolgenden Scheibes (34) des stromabwärts gelegenen Durchlasses bzw. Kanals (3) zentriert ist und die sich stromaufwärts tangential an die Krümmung (40) anschließt, indem sie einen Wendepunkt u. zw. stromabwärts nach dem stromabwärts gelegenen Durchlaß bzw. Kanal (3) hin bildet.

8. Vorrichtung zum Befördern von Munition nach Anspruch 7, dadurch gekennzeichnet, daß der gekrümmte Verbindungsdurchlaß bzw. -kanal (4) von zwei Paaren von parallelen Führungen begrenzt wird, die sich jeweils an die Führungen (22) und (23) des feststehenden Durchlasses bzw. Kanals (2) und des bewegbaren Durchlasses bzw. Kanals (3) anschließen und von welchen jede die Form eines ersten Kreisbogens (220, 330, 421) von variabler Länge aufweist, der auf die Achse des Auslaß- Scheibes (37) zentriert ist, gefolgt von einem zweiten Kreisbogen, (320, 331), der auf die Achse des darauf folgenden Scheibes (34) des bewegbaren Durchlasses bzw. Kanals (3) zentriert ist.

9. Vorrichtung zum Befördern von Munition nach Anspruch 8, dadurch gekennzeichnet, daß das Führungspaar des Abschnittes (40) des Verbindungsdurchlasses bzw. -kanals (4), der auf das Auslaß- Scheibe (37) zentriert ist, auf wenigstens einem Abschnitt des ersten Kreisbogens von variabler Länge von zwei Gallschen Ketten (42a, 42b) gebildet ist, deren eines Ende (421) mit der äußeren Führung (22') des Magazins (20) in Verlängerung der Auslaß-Weiche (7) verbunden ist und deren anderes Ende (422) gleitend von einem Durchlaß bzw. Kanal (43) aufgenommen wird, der das Magazin bildet und drehfest mit dem bewegbaren Durchlaß bzw. Kanal (3) verbunden ist, u. zw. über eine variable Länge, die von der Winkelstellung des bewegbaren Durchlasses bzw. Kanals (3) abhängt.

10. Vorrichtung zum Befördern von Munition nach Anspruch 9, dadurch gekennzeichnet, daß wenigstens eine der Ketten (42a) in ihrem kreisförmigen Abschnitt auf einem Rad (42) abgestützt ist, das auf der Welle (370) des Auslaß-Scheibes (37) befestigt ist.

11. Vorrichtung zum Befördern von Munition nach Anspruch 9, dadurch gekennzeichnet, daß der bewegbare Durchlaß bzw. Kanal (3) mit zwei Führungsritzeln (9) jedes für eine entsprechende Kette (43) versehen ist und daß die Ritzel (9) auf Achsen (90) zentriert sind, von welchen jede in einer Ebene P1 gelegen ist, die durch die Achse der · Drehzapfen (370) und durch den Verbindungspunkt D zwischen dem Ende bzw. dem Rand der bewegbaren Führung (330) und der Kette (42) verläuft.

12. Vorrichtung zum Befördern von Munition nach Anspruch 8, dadurch gekennzeichnet, daß das Auslaß- Scheibe (37) und das darauffolgende Scheibe (34) des bewegbaren Durchlasses bzw. Kanals (3) ungeachtet der Orientierung des bewegbaren Durchlasses bzw. Kanals in einer Drehbewegung mit der gleichen Geschwindigkeit und im entgegengesetzten Sinn unter Zwischenschaltung von Zahnrädern (371) (341) angetrieben werden, die auf den Wellen (370) (340) der Scheibe (37) und (34) befestigt sind und ineinander eingreifen, und daß die Zahnräder Grunddurchmesser aufweisen, die gleich dem Mittelabstand der Wellen (370) und (340) sind.

# Fig 1

# Fig 2

Fig 3

Fig 4

**Fig 5**

**Fig 6**

3

Fig 7

Fig 8

Fig 9

Fig 10

Fig 11

## Fig 12

## Fig 13

## Fig 14

442
443
441
46
47

VI
VI

## Fig 15

48
46
47
47

## Fig 16

45
47
46
46

VIII
VIII

## Fig 17

48
46
45